# EUROPEAN PATENT SPECIFICATION

(11) **EP 3 412 721 B1**
(45) Date of publication and mention of the grant of the patent: **29.04.2020**
(21) Application number: 18176244.4
(22) Date of filing: 06.06.2018
(51) Int. Cl.: C08L 39/06, C08L 83/04, C08J 7/04, C09D 139/06, C09D 183/04

(54) **ANTI-FOG COMPOSITION FOR APPLICATION ON POLYSTYRENE SHEET, POLYSTYRENE SHEET COMPRISING A SURFACE COATING FILM OBTAINED BY APPLYING SAID COMPOSITION AND RELATED APPLICATION METHOD**
ANTIBESCHLAGZUSAMMENSETZUNG ZUR APPLIKATION AUF EINEM POLYSTYROLFOLIE, DURCH AUFBRINGUNG DIESER ZUSAMMENSETZUNG BESCHICHTETE POLYSTYROLFOLIE UND BESCHICHTUNGSVERFAHREN DAFÜR
COMPOSITION ANTI-BUÉE POUR APPLICATION SUR UNE FEUILLE EN POLYSTYRÈNE, FEUILLE EN POLYSTYRÈNE REVÊTUE OBTENUE EN APPLIQUANT LADITE COMPOSITION ET MÉTHODE D'APPLICATION À CET EFFET

(30) Priority: 06.06.2017 IT 201700061483
(43) Date of publication of application: 12.12.2018
(73) Proprietor: SIRAP-GEMA S.p.A., 25028 Verolanuova (Brescia) (IT)
(72) Inventor: TIRELLI, Simone, 26015 Soresina (CR) (IT)
(74) Representative: Zambardino, Umberto

(56) References cited:
- JP-B2- 3 241 797
- US-A1- 2004 142 186
- US-A1- 2004 197 506
- DATABASE WPI Week 201015 Thomson Scientific, London, GB; AN 2010-B60032 XP002779858, -& JP 2010 037387 A (DAICEL POLYMER KK) 18 February 2010 (2010-02-18)
- DATABASE WPI Week 200848 Thomson Scientific, London, GB; AN 2008-H52517 XP002779857, -& JP 2008 115360 A (DAICEL POLYMER KK) 22 May 2008 (2008-05-22)

## Description

### Application field

In the most general aspect thereof, the present invention relates to the field of production of sheets made of thermoplastic material, preferably transparent, used for forming containers intended for packaging food or food products.

In particular, the present invention relates to an anti-condensation or anti-fog composition (so-called anti-fog) for the application on polystyrene sheets, in particular bi-oriented polystyrene.

The present invention relates also to a polystyrene sheet, in particular bi-oriented polystyrene, comprising a coating film obtained by applying said anti-fog composition thereon, as well as a method of producing such a coated sheet.

### Prior art

As well known, sheets of thermoplastic material obtained from the extrusion of various thermoplastic resins are widely used for the production of containers intended for packaging food or food products. Such containers are usually obtained thermoforming the sheets of thermoplastic material using appropriate thermoforming machines, such as vacuum-using thermoforming machines or press moulding machines in a heated mould.

Among the thermoplastic resins, polystyrene, polyethylene terephthalate, or polypropylene, are widely used as materials for the production of thermoplastic material sheets and containers obtained therefrom due to the transparency of such materials.

A problem of the transparent containers obtained from the above-indicated sheets of thermoplastic materials is that the surfaces thereof tend to fog up due to the moisture condensation when the thermoformed container is filled with the food or food product to be packaged and/or subsequently to the packaging, for example during the package storage period before use especially in refrigerated conditions, or even when filling with hot food, such as cooked food.

Therefore, several compositions having anti-fog or anti-condensation (anti-fog) properties have been developed which are applied on a surface of the extruded sheets before the thermoforming thereof to produce containers, to form a coating film on the surface intended to be the inner surface of the thermoformed containers, film that should prevent condensation.

For example, US patent US 5,814,684 discloses a composition having anti-fog properties containing a fatty acid ester of sucrose, in particular sucrose laurate, a hydrophilic film forming polymer, in particular polyvinylpyrrolidone (PVP) and a polyvalent alcohol, such as glycerine or sorbitol.

The patent application EP 1041105 discloses a thermoplastic material sheet having anti-fog properties comprising a substrate of a transparent thermoplastic material on which, by one side, an anti-fog layer is applied containing both a lauric acid ester of sucrose with a HLB (Hydrophilic Lipophilic Balance) value of 14-16 and a water-soluble polymer, wherein the weight ratio between said ester and said water-soluble polymer ranges between 50:50 and 80:20. The patent application EP 1041105 reports that the transparent substrate may be a sheet of different polymers including polystyrene and the water-soluble polymer is preferably PVP. The patent application EP 1041105 also encompasses the application of a silicone emulsion on the side of the thermoplastic material sheet opposite to that of the anti-fog layer to improve the sheet slip properties during handling.

The patent application US 2003/0232209 discloses a thermoplastic material sheet having a coated surface with a coating film having anti-fog properties wherein said film comprises a surfactant such as a fatty acid ester of sucrose, and a cyclodextrin or a modified cyclodextrin. Among the thermoplastic materials of application, polystyrene is encompassed, including bi-axially stretched polystyrene.

The patent application US 2004/0142186 discloses a thermoplastic material sheet having a film coated surface having anti-fog properties wherein the film comprises a fatty acid ester, polyvinylpyrrolidone, a polyoxyethylene-polyoxypropylene block copolymer and a silicone oil, in particular polydimethylsiloxane. The examples illustrate coating compositions comprising an aqueous emulsion of polydimethylsiloxane with a 10,000 centistoke (cSt) viscosity.

Similar compositions having anti-fog properties for the coating of thermoplastic material sheets are also described in the Japanese patent applications JP 3241797, JP 2008 115360 and JP2010 037387.

Although the prior art offers different solutions to impart anti-fog properties to a transparent thermoplastic material sheet and to the vessels obtained from the forming thereof, of which the aforementioned disclosures are just a few examples, the need is felt in the field to identify new anti-fog compositions optimally combining a series of desired properties. In particular, it is required that the anti-fog compositions have a better stability both at the time of the preparation thereof and during storage before use and as a result of application on thermoplastic substrates. Furthermore, the anti-fog compositions are required to have adequate compatibility with the application substrates such as, in particular, polystyrene sheets, and especially bi-oriented polystyrene sheets.

In fact, due to the intrinsic structure of this material, especially of the bi-oriented polystyrene, various drawbacks can occur varying depending on the anti-fog composition chosen for the application, among which lack of uniformity of the anti-fog film on the sheet surface, ease of detachment of such film in subsequent sheet processing, in particular during thermoforming, etc. These drawbacks negatively affect the anti-fog properties imparted to the sheet and to the containers produced therefrom so to become unsatisfactory or not acceptable from a functional and/or commercial point of view.

It is therefore felt the need in the field to identify new anti-fog compositions for the application on polystyrene sheets, in particular on bi-oriented polystyrene, which are more and more stable and effective as regards the anti-fog properties imparted to the sheet and to the thermoformed articles obtained therefrom without compromising other desirable properties connected in particular to the subsequent processing of such sheets, such as the sheet thermoformability and an adequate transparency after thermoforming.

The main object of the present invention is therefore to provide a composition for the application on polystyrene sheets, in particular oriented polystyrene, having improved stability and able to confer the same optimal anti-fog and slip properties (or, in other terms, anti-blocking properties), so to satisfy the aforementioned requirements of the prior art.

A further object of the present invention is to provide a composition, as above, simple and cost-effective to prepare and apply.

### Summary of the invention

These objects are primarily achieved by an anti-fog composition for the application on a polystyrene sheet surface, in particular oriented polystyrene, comprising at least one fatty acid ester of sucrose, polyvinylpyrrolidone (PVP) and at least one polysiloxane wherein the weight ratio between said at least one fatty acid ester of sucrose and PVP ranges from 0.7:1 to 7:1 and wherein the weight ratio between said at least one fatty acid ester of sucrose and said at least one polysiloxane ranges from 0.6:1 to 6:1, the composition being characterized in that said at least one polysiloxane has a viscosity between 200 mm2 / sec and 500 mm2/sec (200-500 cSt), and is selected from a polysiloxane terminated at the ends of the polymeric chain with alkyl silyl end units, a polyether-modified polysiloxane, and mixtures thereof.

The aforesaid objects are also achieved by a polystyrene sheet, in particular oriented polystyrene, having on one surface thereof a coating film having anti-fog properties, comprising at least one fatty acid ester of sucrose, polyvinylpyrrolidone (PVP) and at least one polysiloxane wherein the weight ratio between said at least one fatty acid ester of sucrose and PVP ranges from 0.7:1 to 7:1, and wherein the weight ratio between said at least one fatty acid ester of sucrose and said at least one polysiloxane ranges from 0.6:1 to 6:1, the sheet being characterized in that the at least one polysiloxane of the coating film has a viscosity between 200 mm2/sec and 500 mm2/sec (200-500 cSt), and is selected from a polysiloxane terminated at the ends of the polymer chain with alkyl silyl end units, a polyether-modified polysiloxane, and mixtures thereof.

The aforesaid objects are also achieved by a process for applying a coating film having anti-fog properties on a polystyrene sheet, in particular oriented polystyrene.

This process comprises the steps of:
- subjecting at least one surface of the polystyrene sheet to a hydrophilization treatment,
- applying an anti-fog composition, as defined above, on said at least one polystyrene sheet surface subjected to said hydrophilization treatment, and
- drying the anti-fog composition applied to form a coating film having anti-fog properties on said at least one polystyrene sheet surface. Preferably, the hydrophilization treatment is a corona discharge treatment.

### Detailed description

In the present invention, the term "polystyrene sheet" means a sheet obtained according to the conventional extrusion methods starting from polystyrene resins or styrene copolymers with other monomers, in particular with acrylic monomers, such as styrene and acrylonitrile copolymers. Also included in the scope of the present invention, are polymer-alloy sheets between polystyrene and rubber, as well as any mixture of the materials indicated above.

The term "oriented polystyrene sheet" means a polystyrene material SIR060BEP sheet, as previously defined, obtained by extrusion and subjected to a stretching step during or following the extrusion. The stretching of the polystyrene sheet may be monoaxial (*e.g*., in the sheet extrusion direction) or bi-axial (*e.g*., in the sheet extrusion direction and in the direction transverse to the extrusion direction). The monoaxial or bi-axial stretching ratio can vary within a conventional range, for example the maximum stretching ratio in the extrusion direction can range between 1.5 and 3, and the maximum stretching ratio in the direction transverse to the extrusion direction can range between 2 and 4. Preferably, in the present invention, the polystyrene sheet is bi-orientated, *i.e.* bi-axially stretched, as indicated above.

Preferably, the oriented or non-oriented polystyrene sheet is obtained in order to be transparent to such an extent to be used as a material for the production of containers for the food field.

In the anti-fog composition according to the invention, the fatty acid ester of sucrose is preferably selected from the group consisting of stearate ester of sucrose, palmitate ester of sucrose, laurate ester of sucrose, oleate ester of sucrose, and mixtures thereof. Such esters may be in the form of monoesters, di-esters or tri-esters or mixtures thereof, and the use of the monoester form, or a mixture wherein this form is the main component, is preferable.

Preferably, in the anti-fog composition according to the invention, the fatty acid ester of sucrose consists of laurate ester of sucrose or a mixture thereof with any or more of the other indicated-above esters of sucrose.

The fatty acid ester of sucrose is a non-ionic surfactant and contributes predominantly to the good anti-fog properties of the coating layer applied to the sheet, as well as to confer an adequate resistance of such coating film on the surface of such sheet.

In the anti-fog composition according to the invention, the polyvinylpyrrolidone (PVP) consists of any water-soluble polymer of this kind. It preferably has a weight average molecular weight between 4 kg/mol and 1000 kg/mol, preferably between 30 kg/mol and 70 kg/mol, in particular 50 kg/mol, in order to have a suitable viscosity when dissolved in an aqueous solvent.

The PVP contributes to the formation of the coating film when the anti-fog composition according to the invention is applied to a polystyrene sheet, as well as to the desired anti-fog properties of such film, favouring a homogeneous distribution of the fatty acid ester of sucrose anchored to the sheet surface and avoiding that water droplets remain anchored to this surface.

As previously mentioned, in the anti-fog composition according to the invention, the weight ratio of at least one fatty acid ester of sucrose and the PVP ranges from 0.7:1 to 7:1. Preferably, this ratio is between 1:1 and 4:1, more preferably 2:1.

If the ratio is lower than 0.7:1, the amount of ester in the anti-fog composition is too low, and consequently the anti-fog effect obtained by the application thereof on a polystyrene sheet is significantly reduced or even compromised. Vice versa, if the ratio is greater than 7:1, the amount of ester in the anti-fog composition is too high, and this disadvantageously implies that the items, for example containers, obtained by thermoforming a polystyrene sheet on which such a composition has been applied, are "soiled", *i.e.* stains or rings are formed. At the same time, the amount of PVP is low and does not allow a uniform distribution of the ester on the surface of the polystyrene sheet, which also negatively affects the anti-fog properties of the sheet coating film.

In the anti-fog composition according to the invention, the polysiloxane is used to confer adequate slip characteristics, or, in other words, anti-blocking characteristics, both to the polystyrene sheet and to the thermoformed items, for example containers, obtained therefrom.

According to the present invention, the polysiloxane has a viscosity between 200 mm2/sec and 500 mm2/sec (200-500 cSt) at room temperature (15-25 °C), and is a polysiloxane terminated at the ends of the polymeric chain with alkyl silyl end units, a polyether-modified polysiloxane, or mixtures thereof.

Preferably, the viscosity of the polysiloxane is between 350 mm2 / sec and 500 mm2/sec (350-500 cSt), in particular 350 mm2/sec (350 cSt). This viscosity range is particularly suitable for applications in the food field.

Polysiloxanes suitable for use in the anti-fog composition according to the invention consists preferably of one or more polyalkyl siloxanes, in particular polydimethylsiloxane, polydiethylsiloxane, or mixtures thereof. Preferably, the at least one polysiloxane consists of polydimethylsiloxane, or a mixture thereof. According to the invention, such polyalkylsiloxanes are terminated at the ends of the polymeric chain with alkyl silyl end units, preferably trimethyl silyl.

Preferably, the at least one polysiloxane terminated with alkyl silyl units consists of at least one polydimethylsiloxane terminated at the ends with a trimethylsilyl unit or a mixture thereof.

Alternatively, or in mixture with the polyalkylsiloxanes terminated at the ends as indicated above, polyether-modified polysiloxanes can be used. This kind of polysiloxanes may be based on polyalkylsiloxanes, as indicated above, on which side polyether chains are inserted. Such polyether chains are preferably chains of poly(ethylene oxide), poly(propylene oxide) and/or ethylene oxide and propylene oxide co-polyether chains. The number of ethylene oxide and/or propylene oxide units in the polyether chains may be between 10 and 40, in particular between 20 and 30.

As previously mentioned, in the anti-fog composition according to the invention, the weight ratio of at least one fatty acid ester of sucrose and the at least one polysiloxane ranges from 0.6:1 to 6:1. Preferably, this ratio is between 1:1 and 4:1, more preferably 2:1.

If the ratio is lower than 0.6:1, the amount of silicone compound (polysiloxane) is too low, thereby significantly reducing or making insufficient the slip characteristics of the polystyrene sheet and the thermoformed items obtained therefrom. Vice versa, if the ratio is higher than 6:1, the high amount of silicone compound leads to a significant increase in production costs of the anti-fog composition according to the invention without providing a greater benefit (increase) in terms of the slip of the sheet and the thermoformed item obtained therefrom. Moreover, the greater (excessive) amount of silicone compound negatively influences the anti-fog properties of the ester component, and this is reflected in particular in a possible whitening effect (formation of white stains) on the polystyrene sheet during the thermoforming thereof.

It has been surprisingly found that an anti-fog composition containing the aforesaid components in the indicated ratio ranges, when applied to a polystyrene sheet, in particular of bi-oriented polystyrene, confers optimal anti-fog and slip properties to this sheet without compromising other desirable sheet properties before and after the subsequent processing thereof, in particular the transparency. In particular, it has been found that, where a polystyrene sheet surface-coated with the anti-fog composition of the invention is processed in thermoforming to produce thermoformed items such as containers, such optimal anti-fog and slip properties are substantially maintained throughout the processing and in the final thermoformed items without significantly compromising or worsening other desirable properties such as the transparency, in particular.

Furthermore, it has been surprisingly found that, using in the anti-fog composition of the invention, silicone components consisting of polysiloxanes as indicated above with a reduced viscosity between 200 mm2/sec and 500 mm2/sec (200-500 cSt), in particular between 350 and 500 mm2/sec (350-500 cSt), not only a better solubility of these silicone components in the aqueous vehicle is obtained, but also such silicone components are more compatible with the other components of the composition (ester and PVP) compared to the use of similar higher viscosity silicone components. The emulsion or solution resulting from the mixing of the components forming the anti-fog composition of the invention therefore results to be more stable, not only at the time of preparation, but also during storage and (subsequent) use without formation of precipitates or suspensions with phase separation of the silicone components, side reactions with the formation of by-products, foaming, etc. Thus, the anti-fog composition of the invention is also easier to prepare and apply.

Vice versa, it has been found that by using higher viscosity silicone components such as in the known anti-fog compositions, the emulsion appears to be unstable already at the time of preparation and/or subsequently since phase separation and/or clumps formation before use is frequently observed (*e.g*., after a relatively long storage period of the anti-fog composition) and/or crack formation in the anti-fog coating film on the surface of the polystyrene sheet after use of the anti-fog composition.

At the same time, it has been found that the aforementioned silicone components, despite their low viscosity, give optimal slip characteristics to the polystyrene sheet, and to the thermoformed items therefrom, without compromising other desirable properties of the sheet before and after subsequent processing thereof, indeed contributing advantageously to lower the water surface tension and moreover preventing the formation of oily stains visible on the coated surface of the polystyrene sheet and on the thermoformed items therefrom, which are instead attributable to the use of higher viscosity silicone components in the anti-fog composition.

Moreover, the use of end-terminated polysiloxanes has the significant advantage over the homologues not end-terminated silicones of a greater compatibility with the packaged food or food product, in particular in terms of absence of migration of specific chemicals from the plastic material of the packaging to the packaged food or food product, so as to satisfy particularly stringent regulations in the food packaging field with plastic material such as the European regulations EC 1935/2004, EU 10/2011 and EC 231/2012, and subsequent modifications thereof. Furthermore, the end-terminated polysiloxanes are also more compatible both with the other components of the composition of the invention and with the substrate of plastic material they are applied thereon, *i.e*. polystyrene, in particular bi-oriented polystyrene (OPS).

The anti-fog composition according to the invention is in a liquid form (solution or possibly emulsion) before application to the polystyrene sheet wherein the above-mentioned components are dissolved or solubilized in a solvent or aqueous vehicle consisting of water or a mixture of water and alcohol, *e.g*. ethanol or isopropanol.

The anti-fog composition according to the invention may comprise further ingredients to confer or enhance further properties such as antistatic agents, etc.

The anti-fog composition of the present invention can be prepared by any process involving the mixing of the components thereof, in particular fatty acid ester of sucrose, PVP and polysiloxane in an aqueous solvent such as water or a mixture of water and alcohol, in pre-established ratios comprised in the above-indicated ranges.

Preferably, the anti-fog composition of the present invention is obtained by mixing pre-established aliquots of an ester solution, a PVP solution and a polysiloxane solution or emulsion followed possibly by a dilution.

For example, according to a preferred embodiment of the invention, the anti-fog composition according to the invention can be obtained by mixing:
1) 5-10 parts by volume of a solution containing at least one fatty acid ester of sucrose in aqueous solvent with a solids content of about 39-43% by weight;
2) 2-10 parts by volume of a PVP solution having a solids content of about 30% by weight;
3) 2-10 parts by volume of a silicone emulsion (oil in water) of polysiloxane (preferably polydimethylsiloxane) having a solids content of about 35-40%, and a viscosity between 200 mm2/sec and 500 mm2/sec (200-500 cSt), preferably between 350 mm2/sec and 500 mm2/sec (350-500 cSt), in particular 350 mm2/sec (350 cSt), wherein the polysiloxane is terminated at the ends of the polymeric chain with alkyl silyl end units and/or is a polyether-modified polysiloxane; and diluting the whole with an aqueous solvent (water or mixture of water and alcohol, *e.g.* ethyl or isopropyl alcohol, preferably isopropyl alcohol) up to a total content of 1000 parts by volume.

Preferably, the commercial product Rikemal A produced by Riken Vitamin Co. LTD containing laurate ester of sucrose in aqueous solvent and having a solids content of about 39-43% can be used as a solution containing at least one fatty acid ester of sucrose.

Preferably, the commercial product Sokalan® K30 produced by Basf and having a solids content of about 30% can be used as a PVP solution.

Alternatively, it is possible to prepare the concentrated PVP solution, *e.g.* with a content of 30% by weight, starting from powdered PVP and hot-dissolving the PVP powder in an aqueous solvent followed by cooling. Preferably, in this alternative, the commercial product Luviskol® K 17 Powder produced by Basf can be used as a powdered PVP.

As a silicone emulsion, it is possible to use a silicone emulsion of a polysiloxane terminated at the ends with alkyl silyl units, preferably an emulsion containing polydimethylsiloxane terminated at the ends with trimethylsilyl units. An emulsion of this kind is constituted, for example, by the commercial products Silicone AB35 and the Foodcare® antiblock series having a solids content of about 35% and marketed by Van Meeuwen Chemicals BV.

The application of the anti-fog composition according to the invention to a polystyrene sheet can be carried out by any surface coating method known in the art. For example, the application can be carried out by coating in suitable roller stations, for example using a "kiss roll", by immersion of the sheet in a bath of the anti-fog composition according to the invention, or by spraying using suitable spray nebulizing systems followed by coating with a spreader roller/applicator.

The surface of the polystyrene sheet is subjected to a hydrophilization treatment, preferably a corona treatment, before application thereon of the anti-fog composition according to the invention to increase the sheet surface tension, for example at a value up to at 0.45-0.50 mN (45-50 dyne) or higher. In fact, the polystyrene surface tension, in particular the bi-oriented polystyrene, is too low (normally between 0.32 and 0.36 mN (32-36 dyne) and therefore the sheet must be treated to reach a surface tension value of at least 0.45-0.50 mN (45-50 dyne) so that the anti-fog composition of the invention can be anchored effectively to the sheet surface.

The amount of the anti-fog composition to be applied to the polystyrene sheet surface can generally range from 20 g/m² to 60 g/m². After the application of the anti-fog composition, the solvent is removed by conventional methods, *e.g.* by drying with hot air at a minimum temperature of 50-60 °C and, in any case, not higher than 130 °C to form a substantially uniform coating layer (or film) on the surface of the polystyrene sheet.

Advantageously, it is to be noted that the coating layer obtained by applying the composition according to the invention gives the polystyrene sheet both optimal anti-fog properties and adequate slip (or anti-blocking) properties, all being obtained satisfactorily by applying a single composition on the surface of interest of this sheet.

If desired, for example to increase the slip properties of the sheet, the surface opposite to that of application of the anti-fog composition can be coated directly (*i.e.* without the prior corona treatment) with an anti-blocking agent. This anti-blocking agent may be a silicone or the same anti-fog composition of the invention which would therefore be applied directly in this circumstance (*i.e.* without the prior corona treatment) even on the opposite surface to that of interest for the anti-fog properties.

The silicone is per se conventional and can be applied in the form of a solution or emulsion thereof in an aqueous vehicle, in particular water. The silicone can preferably be selected from polyalkyl siloxanes, in particular polydimethylsiloxane, polydiethylsiloxane, or mixtures thereof. Preferably, the at least one polysiloxane is consisting of polydimethylsiloxane or a mixture thereof. It should be noted that in the embodiment of the invention wherein the anti-fog composition is also applied to the surface of the sheet opposite to that of interest for the anti-fog properties, a single application composition is used, which is completely compatible with the material (polystyrene) of the sheet capable of imparting both the anti-fog and slip properties at the same time, instead of two different compositions, such as some solutions of the prior art, thus achieving a significant reduction in the application costs and a significant simplification of the equipment requested for this application.

The present invention will now be illustrated by means of some examples given as for illustrative and non-limiting purpose.

### Comparative Example 1

A comparative anti-fog composition was prepared by mixing 8 parts by volume of fatty acid esters of sucrose (Rikemal A produced by Riken Vitamin Co. LTD - solids content (esters) equal to 40% by weight), 5.3 parts by volume of a 30% by weight PVP solution (Sokalan® K30 produced by Basf), 4.6 parts by volume of polydimethylsiloxane silicone emulsion, wherein the silicone has a viscosity of 1000 mm²/sec (1000 cSt) (Wacker® E2 produced by Wacker Silicones - solids content (silicone) equal to 35% by weight) and 982.1 parts of water, and mixing to obtain a substantially homogeneous solution.

This solution contained an esters/PVP ratio of about 2:1 and an esters/polysiloxane ratio of about 2:1.

In the thus obtained solution, a substantial sediments and clumps formation was observed, as well as the formation of a surface thickening due to the silicone phase separation. A vigorous stirring of the solution is adequate to break the sediments but not to eliminate clumps and the surface thickening. Similar results were found also observing the solution prepared as above, after 10 minutes, 20 minutes and 40 minutes from the preparation and in anti-fog solutions obtained from the same components indicated above and having a higher silicone content (esters/polysiloxane ratio higher than 2:1).

### Example 1

An anti-fog composition according to the invention was prepared by mixing 8 parts by volume of fatty acid esters of sucrose (Rikemal A produced by Riken Vitamin Co. LTD - solids content (esters) equal to 40% by weight), 5.3 parts by volume of a 30% by weight PVP solution (Sokalan® K30 produced by Basf), 4.6 parts by volume of polydimethylsiloxane silicone emulsion terminated at the ends with trimethylsilyl units and having a viscosity of 350 mm2/sec (350 cSt) (series Foodcare® antiblock produced by Van Meeuwen Chemicals BV - solids content (silicone) equal to 35% by weight) and 982.1 parts of water, and mixing to obtain a substantially homogeneous solution.

This solution contained an esters/PVP ratio of about 2:1 and an esters/polysiloxane ratio of about 2:1.

In the thus obtained solution, no sediment and/or clump formation was observed, and no silicone phase separation phenomena were observed either both at the time of preparation and at the observation after 10 minutes, 20 minutes, and 40 minutes from the preparation of the solution. Similar results were found also in anti-fog solutions obtained from the same components indicated above and having a higher silicone content (esters/polysiloxane ratio higher than 2:1).

### Example 2

An anti-fog composition according to the invention was prepared as described in the Example 1 except that, as silicone emulsion of polydimethylsiloxane terminated at the ends with trimethylsilyl units and having a viscosity of 350 mm2/sec (350 cSt), the product Sylicone AB35 produced by Van Meeuwen Chemicals BV (solids content (silicone) equal to 35% by weight) was used.

In the thus obtained solution no sediment and/or clump formation was observed, and no silicone phase separation phenomena were observed either both at the time of preparation and at the observation after 10 minutes, 20 minutes, and 40 minutes from the preparation of the solution. Similar results were found also in anti-fog solutions obtained from the same components indicated above and having a higher silicone content (esters/polysiloxane ratio higher than 2:1).

### Example 3

An anti-fog composition according to the invention was prepared as described in the Example 1 except that, as a silicone component, a solution of a poly(ethylene oxide)-modified polysiloxane was used - number of ethylene oxide units between 10 and 40 - and having a viscosity of 350 mm2/sec (350 cSt), the solution having a solids content (silicone) of 35% by weight.

In the thus obtained solution, no sediment and/or clump formation was observed, and no silicone phase separation phenomena were observed either both at the time of preparation and at the observation after 10 minutes, 20 minutes, and 40 minutes from the preparation of the solution. Similar results were found also in anti-fog solutions obtained from the same components indicated above and having a higher silicone content (esters/polysiloxane ratio higher than 2:1).

### Example 4

The anti-fog compositions of the previous examples were used to coat corresponding bi-oriented polystyrene sheets. The polystyrene was extruded in a conventional manner and subsequently stretched in the extrusion direction with a maximum stretching ratio between 1.5 and 3, and in a direction transverse to the extrusion direction according to a maximum stretching ratio between 2 and 4, to form sheets of essentially transparent bi-oriented polystyrene. One of the sides of these sheets has undergone a corona discharge treatment to increase the surface tension to a value of at least 0.45-0.50 mN (45-50 dynes).

Subsequently, the anti-fog compositions of the previous examples were applied on the side treated with corona discharge of a corresponding polystyrene sheet in an amount from 20 g/m² to 60 g/m² to form a surface coating on the sheets thereof. At the same time, the anti-fog compositions of the previous examples were also applied on the side of the corresponding sheets not treated with corona discharge to obtain a second coating.

The above-mentioned coatings of the sheets were then dried in an oven to remove the solvent, thereby forming corresponding layers or films with anti-fog and slip properties on the opposite surfaces of the sheets.

The coated sheets were then wrapped in coils and no tendency for blocking was observed during winding.

Later, the coated sheets were unwound from the coil and thermoformed in a conventional moulding machine at a temperature of 120-140 °C to obtain a plurality of containers and corresponding closure lids.

The following properties of the coated sheets and of the thermoformed items obtained therefrom were evaluated according to the indicated criteria.

The coating uniformity was assessed through a visual examination aimed at highlighting a possible presence of rings, stains or cracks in the coating layer of the sheet or of the thermoformed item. An "A" value was assigned in the absence of visible stains, rings and/or cracks and a "B" value in the presence of at least one visible stain, ring or crack on the sheet and/or the corresponding thermoformed item.

The transparency of the sheets and of the corresponding thermoformed items was assessed through a visual examination and light transmission measurements with wide-angle diffused light (haze measurements) and with diffused light at a narrow angle (clarity measurements). In this case, an "A" value was assigned in the absence of visible stains, rings and/or cracks and an "A-" value in the presence of at least one visible stain, ring or crack on the sheet and/or the corresponding thermoformed item.

Regarding the assessment of the anti-fog properties, "cold" and "hot" tests were carried out in triplicate on thermoformed items (containers and respective lids), as follows.

For the "cold" tests, 50-150 ml of cold water (10-14 °C) were added to each sample of the above-mentioned containers, the containers were closed with the respective lids and stored at a refrigerated temperature (about 5 °C) in a refrigerator. The containers and the respective lids were observed by visual examination for the assessment of possible fogging and/or formation of condensation water droplets and they were observed both in the initial storage period and during the storage period through periodic visual checks after 5, 30, 60, and 120 minutes from the beginning of the storage.

For the "hot" tests, 50-150 ml of hot water (80-90 °C) were added to each sample of the above-mentioned containers and the containers were closed with the respective lids. The containers and the respective lids were observed by visual examination to check for possible fogging and/or formation of condensation water droplets both after closure and after 5, 30, 60, and 120 minutes from closing the container.

An "A" value was assigned in the absence of evidence of fogging and/or droplets formation, and a "B" value in the presence of evidence of fogging and/or droplets formation during the aforementioned "hot" and "cold" tests.

Furthermore, the anti-blocking properties of the containers, produced as previously described, were evaluated by stacking into each other. An "A" value was assigned in the absence of blocking and a "B" value in the case of evidence of a tendency of blocking.

The friction coefficient (COF) was also measured on the outer surface of the containers in accordance with ASTM D1894.

The results of the above tests are shown in the following Table 1.

| | Ex. C. 1 | Ex. 1 | Ex. 2 | Ex. 3 |
|---|---|---|---|---|
| Coating uniformity | B | A | A | A |
| Transparency | A- | A | A | A |
| Anti-fog properties | A | A | A | A |
| Anti-blocking properties | B | A | A | A |
| COF | 0.26 | 0.21 | 0.21 | 0.21 |

As evident from the results reported in the aforesaid Table 1, the sheets and the corresponding thermoformed items coated with the anti-fog composition according to the present invention (Examples 1-3) are optimal in all the desired characteristics indicated above, while the sheets and the corresponding thermoformed items coated with the comparative anti-fog composition (Comparative Example 1), while having good anti-fog properties, do not have coating uniformity and satisfactory anti-blocking properties, and furthermore the transparency is not entirely satisfactory. In fact, in these thermoformed sheets and items coated with the comparative anti-fog composition, the formation of rings/stains or cracks/fissures in the coating layer is found (in the case of the thermoformed items) which are believed to be due to the separation tendency of the higher viscosity silicone component from the remaining components of the anti-fog composition.

Regarding the COF measurements, a satisfactory value of 0.21 is found in accordance with ASTM D1894 for all the sheets and the corresponding thermoformed items coated with the anti-fog composition according to the present invention (Examples 1-3). Vice versa, the sheets and the corresponding thermoformed items coated with the comparative anti-fog composition (Comparative Example 1) have a COF value equal to 0.26 which is not entirely satisfactory. This COF value is fully comparable with that found on standard containers obtained from a similar sheet on a surface of which only a silicone was applied (COF = 0.26), while on containers obtained from a similar silicone-free sheet, COF values equal to 0.39 were found.

The above results confirm that the anti-fog composition according to the invention, when applied to a polystyrene sheet, is able to provide it with a coating layer with excellent anti-fog and slip properties, the latter even improved with respect to a similar sheet in which silicone alone was applied, which remain substantially unaltered even in the thermoformed products obtained from the coated sheet. Furthermore, the aforesaid applied coating layer is uniformly distributed on the surface of the sheet and firmly anchored thereto.

## Claims

1. Anti-fog composition for the application on a surface of a polystyrene sheet comprising at least one fatty acid ester of sucrose, polyvinylpyrrolidone (PVP), and at least one polysiloxane wherein the weight ratio between said at least one fatty acid ester of sucrose and PVP ranges from 0.7:1 to 7:1, and wherein the weight ratio between said at least one fatty acid ester of sucrose and said at least one polysiloxane ranges from 0.6:1 to 6:1, the composition being **characterized in that** said at least one polysiloxane has a viscosity between 200-500 mm²/sec (200-500 cSt) at room temperature, that is 15-25 °C, and is selected from a polysiloxane terminated at the ends of the polymeric chain with alkyl silyl end units, a polyether-modified polysiloxane, and mixtures thereof.

2. Composition according to claim 1, wherein said at least one polysiloxane has a viscosity between 350 mm²/sec and 500 mm2/ sec (350-500 cSt), in particular 350 mm2/sec (350 cSt).

3. Anti-fog composition according to claim 1 or 2, wherein said at least one polysiloxane consists of at least one polyalkylsiloxane selected from the group consisting of polydimethylsiloxane, polydiethylsiloxane, or mixtures thereof, said at least one polysiloxane being constituted preferably by polydimethylsiloxane, or a mixture thereof.

4. Anti-fog composition according to claim 3, wherein said polyalkylsiloxane is terminated at the ends of the polymeric chain with trimethyl silyl end units.

5. Anti-fog composition according to claim 1 or 2, wherein said at least one polysiloxane is a polyalkylsiloxane modified with poly(ethylene oxide), poly(propylene oxide) chains and/or ethylene oxide and propylene oxide co-polyether chains wherein the number of ethylene oxide and/or propylene oxide units in the polyether chains is between 10 and 40, preferably between 20 and 30.

6. Anti-fog composition according to any one of the preceding claims, wherein the weight ratio between said at least one fatty acid ester of sucrose and PVP, and the weight ratio between said at least one fatty acid ester of sucrose and said at least one polysiloxane ranges from 1:1 to 4:1, preferably the afore-mentioned ratios are both 2:1.

7. Anti-fog composition according to any one of the preceding claims, wherein said at least one fatty acid ester of sucrose is selected from the group consisting of stearate ester of sucrose, palmitate ester of sucrose, laurate ester of sucrose, oleate ester of sucrose, and mixtures thereof, said at least one ester being preferably a laurate ester of sucrose or a mixture thereof.

8. Anti-fog composition according to any one of the preceding claims, wherein said PVP is water-soluble and has preferably a weight average molecular weight between 4 kg/mol and 1000 kg/mol, preferably between 30 kg/mol and 70 kg/mol, in particular 50 kg/mol.

9. Anti-fog composition according to any one of the preceding claims, wherein said polystyrene is axially or bi-axially oriented.

10. Polystyrene sheet, in particular oriented polystyrene, coated on at least one surface with a coating film having anti-fog properties obtained by applying an anti-fog composition according to any one of the preceding claims, said sheet being **characterized in that** said coating film comprises at least one fatty acid ester of sucrose, polyvinylpyrrolidone (PVP), and at least one polysiloxane wherein the weight ratio between said at least one fatty acid ester of sucrose and PVP ranges from 0.7:1 to 7:1, and wherein the weight ratio of said at least one fatty acid ester of sucrose and said at least one polysiloxane ranges from 0.6:1 to 6:1, said at least one polysiloxane having a viscosity between 200 mm2/sec and 500 mm2/ sec (200-500 cSt) at room temperature (15-25°C) and being selected from a polysiloxane terminated at the ends of the polymeric chain with alkyl silyl end units, a polyether-modified polysiloxane, and mixtures thereof.

11. Process for applying a coating film having anti-fog properties to a polystyrene sheet, in particular oriented polystyrene, comprising the steps of:
- subjecting at least one surface of the polystyrene sheet to a hydrophilization treatment,
- applying an anti-fog composition according to any one of claims 1 to 8 on said at least one surface of said polystyrene sheet subjected to said hydrophilization treatment, and
- drying the applied anti-fog composition to form a coating film having anti-fog properties on said at least one surface of the polystyrene sheet.

12. Process according to claim 11, wherein said hydrophilization treatment is a corona discharge treatment.

13. Process according to claim 11 or 12, further comprising the step of applying a silicone on the opposite surface to said surface subjected to the hydrophilization treatment.

14. Process according to claim 11 or 12, wherein said anti-fog composition is also applied on the opposite surface to said surface subjected to the hydrophilization treatment.

## Patentansprüche

1. Antibeschlagzusammensetzung für die Anwendung auf einer Oberfläche einer Polystyrolfolie, umfassend zumindest einen Fettsäureester von Saccharose, Polyinylpyrrolidon (PVP) und zumindest ein Polysiloxan, wobei das Gewichtsverhältnis zwischen dem zumindest einen Fettsäureester von Saccharose und PVP im Bereich von 0,7:1 bis 7:1 liegt und wobei das Gewichtsverhältnis zwischen dem zumindest einen Fettsäureester von Saccharose und dem zumindest einen Polysiloxan im Bereich von liegt 0,6:1 bis 6:1 beträgt, wobei die Zusammensetzung **dadurch gekennzeichnet ist, dass** das zumindest eine Polysiloxan eine Viskosität zwischen 200-500 mm²/sec (200-500 cSt) bei Raumtemperatur, d.h. 15-25 °C, aufweist und aus einem Polysiloxan, das an den Enden der Polymerkette mit Alkylsilyl-Endeinheiten endet, einem polyethermodifizierten Polysiloxan und Mischungen davon ausgewählt ist.

2. Zusammensetzung nach Anspruch 1, wobei das zumindest eine Polysiloxan eine Viskosität zwischen 350 mm/sec und 500 mm²/sec (350-500 cSt), insbesondere 350 mm²/sec (350 cSt), aufweist.

3. Antibeschlagzusammensetzung nach Anspruch 1 oder 2, wobei das zumindest eine Polysiloxan aus zumindest einem Polyalkylsiloxan besteht, das aus der Gruppe ausgewählt ist, die aus Polydimethylsiloxan, Polydiethylsiloxan oder Mischungen davon besteht, wobei das zumindest eine Polysiloxan vorzugsweise aus Polydimethylsiloxan oder einer Mischung davon besteht.

4. Antibeschlagzusammensetzung nach Anspruch 3, wobei das Polyalkylsiloxan an den Enden der Polymerkette mit Trimethylsilyl-Endeinheiten abgeschlossen ist.

5. Antibeschlagzusammensetzung nach Anspruch 1 oder 2, wobei das zumindest eine Polysiloxan ein Polyalkylsiloxan ist, das mit Poly(ethylenoxid)-, Poly(propylenoxid)-Ketten und/oder Ethylenoxid- und Propylenoxid-Copolyetherketten modifiziert ist, wobei die Anzahl der Ethylenoxid- und/oder Propylenoxid-Einheiten in den Polyetherketten zwischen 10 und 40, vorzugsweise zwischen 20 und 30, liegt.

6. Antibeschlagzusammensetzung nach einem der vorhergehenden Ansprüche, wobei das Gewichtsverhältnis zwischen dem zumindest einen Fettsäureester von Saccharose und PVP und das Gewichtsverhältnis zwischen dem zumindest einen Fettsäureester von Saccharose und dem zumindest einen Polysiloxan im Bereich von 1:1 bis 4:1 liegt, vorzugsweise die vorgenannten Verhältnisse beide 2:1 sind.

7. Antibeschlagzusammensetzung nach einem der vorhergehenden Ansprüche, wobei der zumindest eine Fettsäureester von Saccharose aus der Gruppe ausgewählt ist, die aus Stearatester von Saccharose, Palmitatester von Saccharose, Lauratester von Saccharose, Oleatester von Saccharose und Mischungen davon besteht, wobei der zumindest eine Ester vorzugsweise ein Lauratester von Saccharose oder eine Mischung davon ist.

8. Antibeschlagzusammensetzung nach einem der vorhergehenden Ansprüche, wobei das PVP wasserlöslich ist und vorzugsweise ein gewichtsmittleres Molekulargewicht zwischen 4 kg/mol und 1000 kg/mol, vorzugsweise zwischen 30 kg/mol und 70 kg/mol, insbesondere 50 kg/mol, aufweist.

9. Antibeschlagzusammensetzung nach einem der vorhergehenden Ansprüche, wobei das Polystyrol axial oder biaxial orientiert ist.

10. Polystyrolfolie, insbesondere orientiertes Polystyrol, die auf zumindest einer Oberfläche mit einem Beschichtungsfilm mit Antibeschlageigenschaften beschichtet ist, der durch Aufbringen einer Antibeschlagzusammensetzung nach einem der vorhergehenden Ansprüche erhalten wird, wobei die Folie **dadurch gekennzeichnet ist, dass** der Beschichtungsfilm zumindest einen Fettsäureester von Saccharose, Polyvinylpyrrolidon (PVP) und zumindest ein Polysiloxan umfasst, wobei das Gewichtsverhältnis zwischen dem zumindest einen Fettsäureester von Saccharose und PVP im Bereich von 0,7:1 bis 7:1, liegt und wobei das Gewichtsverhältnis zwischen dem mindestens einen Fettsäureester von Saccharose und dem mindestens einen Polysiloxan im Bereich von 0,6:1 bis 6:1 liegt, wobei das mindestens eine Polysiloxan eine Viskosität zwischen 200 mm²/s und 500 mm²/sek (200-500 cSt) bei Raumtemperatur (15-25 °C) aufweist und aus einem Polysiloxan, das an den Enden der Polymerkette mit Alkylsilyl-Endeinheiten endet, einem polyethermodifizierten Polysiloxan und Mischungen davon ausgewählt ist.

11. Verfahren zum Aufbringen eines Beschichtungsfilms mit Antibeschlageigenschaften auf eine Polystyrolfolie, insbesondere orientiertes Polystyrol, umfassend die folgenden Schritte:
- Unterziehen zumindest einer Oberfläche der Polystyrolfolie einer Hydrophilisierungsbehandlung,
- Aufbringen einer Antibeschlagzusammensetzung nach einem der Ansprüche 1 bis 8 auf die zumindest eine Oberfläche der Polystyrolfolie, die der Hydrophilisierungsbehandlung unterzogen wurde, und
- Trocknen der aufgetragenen Antibeschlagzusammensetzung zur Bildung eines Beschichtungsfilms mit Antibeschlageigenschaften auf der zumindest einen Oberfläche der Polystyrolfolie.

12. Verfahren nach Anspruch 11, wobei die Hydrophilisierungsbehandlung eine Koronaentladungsbehandlung ist.

13. Verfahren nach Anspruch 11 oder 12, das weiterhin den Schritt des Auftragens eines Silikons auf die der Hydrophilierungsbehandlung unterworfenen Oberfläche auf der gegenüberliegenden Oberfläche umfasst.

14. Verfahren nach Anspruch 11 oder 12, bei dem die Antibeschlagzusammensetzung auch auf die gegenüberliegende Oberfläche der Oberfläche, die der Hydrophilisierungsbehandlung unterzogen wurde, aufgetragen wird.

## Revendications

1. Composition antibuée pour l'application sur une surface d'une feuille de polystyrène comprenant au moins un ester d'acide gras de saccharose, de la polyvinylpyrrolidone (PVP) et au moins un polysiloxane, dans laquelle le rapport pondéral entre ledit au moins un ester d'acide gras de saccharose et la PVP est compris entre 0,7:1 et 7:1, et dans laquelle le rapport pondéral entre ledit au moins un ester d'acide gras de saccharose et ledit au moins un polysiloxane est compris entre 0,6:1 et 6:1, la composition étant **caractérisée en ce que** ledit au moins un polysiloxane a une viscosité comprise entre 200 et 500 mm²/sec (200 à 500 cSt) à température ambiante, c'est-à-dire 15 à 25°C, et est choisi parmi un polysiloxane terminé aux extrémités de la chaîne polymère par des motifs terminaux alkyl-silyle, un polysiloxane modifié par un polyéther, et les mélanges de ceux-ci.

2. Composition selon la revendication 1, dans laquelle ledit au moins un polysiloxane a une viscosité comprise entre 350 mm²/sec et 500 mm²/sec (350 à 500 cSt), en particulier 350 mm²/sec (350 cSt).

3. Composition antibuée selon la revendication 1 ou la revendication 2, dans laquelle ledit au moins un polysiloxane est constitué d'au moins un polyalkylsiloxane choisi dans le groupe constitué par le polydiméthylsiloxane, le polydiéthylsiloxane, ou les mélanges de ceux-ci, ledit au moins un polysiloxane étant constitué de préférence par le polydiméthylsiloxane, ou un mélange de ceux-ci.

4. Composition antibuée selon la revendication 3, dans laquelle ledit polyalkylsiloxane est terminé aux extrémités de la chaîne polymère par des motifs terminaux triméthylsilyle.

5. Composition antibuée selon la revendication 1 ou la revendication 2, dans laquelle ledit au moins un polysiloxane est un polyalkylsiloxane modifié avec des chaînes de poly(oxyde d'éthylène), de poly(oxyde de propylène) et/ou des chaînes de co-polyéther d'oxyde d'éthylène et d'oxyde de propylène, le nombre d'unités d'oxyde d'éthylène et/ou d'oxyde de propylène dans les chaînes de polyéther étant compris entre 10 et 40, de préférence entre 20 et 30.

6. Composition antibuée selon l'une quelconque des revendications précédentes, dans laquelle le rapport pondéral entre ledit au moins un ester d'acide gras de saccharose et la PVP, et le rapport pondéral entre ledit au moins un ester d'acide gras de saccharose et ledit au moins un polysiloxane se situe dans la gamme allant de 1:1 à 4:1, de préférence les rapports susmentionnés sont tous les deux de 2:1.

7. Composition antibuée selon l'une quelconque des revendications précédentes, dans laquelle ledit au moins un ester d'acide gras de saccharose est choisi dans le groupe constitué par l'ester stéarate de saccharose, l'ester palmitate de saccharose, l'ester laurate de saccharose, l'ester oléate de saccharose, et les mélanges de ceux-ci, ledit au moins un ester étant de préférence un ester laurate de saccharose ou un mélange de ceux-ci.

8. Composition antibuée selon l'une quelconque des revendications précédentes, dans laquelle ladite PVP est soluble dans l'eau et a de préférence une masse moléculaire moyenne en poids comprise entre 4 kg/mole et 1000 kg/mole, de préférence entre 30 kg/mol et 70 kg/mol, en particulier 50 kg/mol.

9. Composition antibuée selon l'une quelconque des revendications précédentes, dans laquelle ledit polystyrène est orienté axialement ou bi-axialement.

10. Feuille de polystyrène, en particulier de polystyrène orienté, revêtue sur au moins une surface d'un film de revêtement ayant des propriétés antibuée obtenu par application d'une composition antibuée selon l'une quelconque des revendications précédentes, ladite feuille étant **caractérisée en ce que** ledit film de revêtement comprend au moins un ester d'acide gras de saccharose, de la polyvinylpyrrolidone (PVP), et au moins un polysiloxane, le rapport pondéral entre ledit au moins un ester d'acide gras de saccharose et la PVP est compris entre 0,7: 1 et 7:1, et dans lequel le rapport pondéral entre ledit au moins un ester d'acide gras de saccharose et ledit au moins un polysiloxane est compris entre 0.6:1 et 6:1, ledit au moins un polysiloxane ayant une viscosité comprise entre 200 mm²/sec et 500 mm²/sec (200 à 500 cSt) à température ambiante (15 à 25°C) et étant choisi parmi un polysiloxane terminé aux extrémités de la chaîne polymère par des motifs terminaux alkyl-silyle, un polysiloxane modifié par un polyéther, et les mélanges de ceux-ci.

11. Procédé d'application sur une feuille de polystyrène d'un film de revêtement ayant des propriétés antibuée, en particulier une feuille de polystyrène orienté, comprenant les étapes suivantes :
- soumettre au moins une surface de la feuille de polystyrène à un traitement d'hydrophilisation,
- appliquer une composition antibuée selon l'une quelconque des revendications 1 à 8 sur ladite au moins une surface de ladite feuille de polystyrène soumise audit traitement d'hydrophilisation, et
- sécher la composition antibuée appliquée pour former un film de revêtement ayant des propriétés antibuée sur ladite au moins une surface de la feuille de polystyrène.

12. Procédé selon la revendication 11, dans lequel ledit traitement d'hydrophilisation est un traitement de décharge corona.

13. Procédé selon la revendication 11 ou la revendication 12, comprenant en outre l'étape consistant à appliquer une silicone sur la surface opposée à ladite surface soumise au traitement d'hydrophilisation.

14. Procédé selon la revendication 11 ou la revendication 12, dans lequel ladite composition antibuée est également appliquée sur la surface opposée à ladite surface soumise au traitement d'hydrophilisation.
